# EUROPÄISCHE PATENTSCHRIFT

(11) **EP 3 921 520 B1**
(45) Veröffentlichungstag und Bekanntmachung des Hinweises auf die Patenterteilung: **12.10.2022**
(21) Anmeldenummer: 20704808.3
(22) Anmeldetag: 06.02.2020
(51) Int. Cl.: F01N 3/025, F01N 13/00, F01N 3/021, F01N 3/20, F01N 1/14

(54) **ABGASNACHBEHANDLUNGSSYSTEM SOWIE VERFAHREN ZUR ABGASNACHBEHANDLUNG EINES VERBRENNUNGSMOTORS**
EXHAUST GAS AFTERTREATMENT SYSTEM, AND METHOD FOR THE EXHAUST GAS AFTERTREATMENT OF AN INTERNAL COMBUSTION ENGINE
SYSTÈME DE POST-TRAITEMENT DE GAZ D'ÉCHAPPEMENT ET PROCÉDÉ POUR LE POST-TRAITEMENT DE GAZ D'ÉCHAPPEMENT D'UN MOTEUR À COMBUSTION INTERNE

(30) Priorität: 06.02.2019 DE 102019102928
(43) Veröffentlichungstag der Anmeldung: 15.12.2021
(73) Patentinhaber: VOLKSWAGEN AG, 38440 Wolfsburg (DE)
(72) Erfinder: BOZALP, Tolga, 13581 Berlin (DE); PAUKNER, Stefan, 38442 Wolfsburg (DE); BARON VON CEUMERN-LINDENSTJERNA, Falk-Christian, 38124 Braunschweig (DE); KAACK, Michael, 38531 Rötgesbüttel (DE)
(74) Vertreter: Gulde & Partner
(86) Internationale Anmeldenummer: PCT/EP2020/052937
(87) Internationale Veröffentlichungsnummer: WO 2020/161215

(56) Entgegenhaltungen:
- EP-A1- 2 570 625
- WO-A1-2004/051059
- DE-A1-102012 021 573

## Beschreibung

Die Erfindung betrifft ein Abgasnachbehandlungssystem sowie ein Verfahren zur Abgasnachbehandlung eines Verbrennungsmotors gemäß dem Oberbegriff der unabhängigen Patentansprüche.

Die aktuelle und eine zukünftig immer schärfer werdende Abgasgesetzgebung stellen hohe Anforderungen an die Endrohremissionen von Kraftfahrzeugen mit Verbrennungsmotor. Dabei kommt dem Zeitraum unmittelbar nach einem Kaltstart des Verbrennungsmotors eine besondere Bedeutung hinsichtlich der Emissionen zu, da in dieser Phase die Abgasnachbehandlungskomponenten möglichst schnell auf ihre Betriebstemperatur aufgeheizt werden sollen, um eine effiziente Abgasnachbehandlung zu ermöglichen. Bei Ottomotoren ist insbesondere das Aufheizen eines (motornahen) Drei-Wege-Katalysators maßgeblich für die Emissionen eines Kraftfahrzeuges. Aus dem Stand der Technik sind Verbrennungsmotoren mit einem Sekundärluftsystem bekannt, bei welchen zum Aufheizen des Drei-Wege-Katalysators Sekundärluft in die Abgasanlage stromabwärts eines Auslasses des Verbrennungsmotors und stromaufwärts des Drei-Wege-Katalysators eingebracht wird. Ferner sind Abgasnachbehandlungssysteme mit einem Abgasbrenner bekannt, bei welchem ein heißes Abgas des Abgasbrenners in die Abgasanlage eingeleitet wird, um den Drei-Wege-Katalysator auf seine Betriebstemperatur aufzuheizen. Durch einen Abgasbrenner kann auch ein Drei-Wege-Katalysator in Unterbodenlage unmittelbar nach einem Kaltstart des Verbrennungsmotors auf seine Betriebstemperatur aufgeheizt werden, da die heißen Brennergase an entsprechender Stelle in die Abgasanlage eingeleitet werden können und somit ein Beheizen des Drei-Wege-Katalysators im Wesentlichen unabhängig vom Abgasstrom des Verbrennungsmotors ermöglichen.

Aus der DE 10 2008 032 600 A1 ist ein Verfahren zum Betreiben eines Abgassystems bekannt, wobei an dem Abgassystem ein Abgasbrenner angeordnet ist, welcher mit unterschiedlichen Verbrennungsluftverhältnissen betrieben wird, um einen Partikelfilter auf seine Regenerationstemperatur aufzuheizen, wobei stromabwärts einer Einleitstelle des Abgasbrenners ein Oxidationskatalysator angeordnet ist. Der Verbrennungsmotor wird mit einem überstöchiometrischen Verbrennungsluftverhältnis und der Abgasbrenner mit einem unterstöchiometrischen Verbrennungsluftverhältnis betrieben, wobei die unverbrannten Abgaskomponenten des Abgasbrenners durch den Oxidationskatalysator mit dem Restsauerstoff aus dem Abgasstrom des Verbrennungsmotors exotherm umgesetzt werden und somit das Abgas vor Eintritt in den Partikelfilter zusätzlich aufheizen.

Die DE 10 2009 003 738 A1 offenbart eine Abgasreinigungsanlage für einen Verbrennungsmotor, wobei in der Abgasanlage ein Abgasreinigungsaggregat angeordnet ist, welches zusätzlich zum Abgasstrom über einen zweiten Einlass mittels eines Abgasbrenners beheizt werden kann. Dabei wird der Abgasbrenner mittels einer Kraftstoffpumpe mit dem Kraftstoff des Verbrennungsmotors und mittels eines Sekundärluftsystems mit Frischluft versorgt, wobei der Abgasbrenner die zum Auslösen oder Unterstützen bei einem Betrieb der Abgasreinigungsanlage benötigte thermische Energie bereitstellt.

Darüber hinaus offenbart die DE 10 2012 011 603 A1 einen fremdgezündeten Verbrennungsmotor mit einer Abgasanlage, wobei in der Abgasanlage ein HC-Adsorber sowie ein dem HC-Adsorber nachgeschalteter Drei-Wege-Katalysator angeordnet ist. Es ist vorgesehen, dass in dem Abgaskanal stromabwärts des HC-Absorbers und stromaufwärts des Drei-Wege-Katalysators ein heißes Brennerabgas eines Abgasbrenners eingeleitet wird, um das Aufheizen des Drei-Wege-Katalysators auf seine Light-Off-Temperatur zu beschleunigen.

Die EP 2 520 625 A1 beschreibt ein Abgasnachbehandlungssystem für einen Dieselmotor, in dessen Abgasanlage ein Katalysator zur selektiven, katalytischen Reduktion von Stickoxiden angeordnet ist. Dabei kann dem Abgasstrom des Verbrennungsmotors alternativ oder zusätzlich zu dem Reduktionsmittel Kraftstoff zugeführt werden, um die Flexibilität und den Einsatzbereich des Abgasnachbehandlungssystem zu erweitern.

Aus der WO 2004/051 059 A1 ist ein Kraftfahrzeug mit einem Diesel-Antriebsmotor bekannt, dessen Abgasanlage eine diskontinuierlich regenerierbare Abgasreinigungseinrichtung aufweist, wobei stromaufwärts der Abgasreinigungseinrichtung eine an den Kraftstofftank des Fahrzeugs angeschlossene Kraftstoffverdampfungseinheit vorgesehen, mittels derer das Motorabgas mit Kraftstoffdampf angereichert wird. Dabei umfasst die Kraftstoffverdampfungseinheit einen Kraftstoffverdampfer in Form eines dem Abgasstrom ausgesetzten Wärmetauschers mit einer Kraftstoffzufuhr und einem Kraftstoffdampfaustritt sowie einen dem Wärmetauscher vorgeschalteten Hilfs-Oxidationskatalysator. Der Gehalt an unverbranntem Dieselkraftstoff ist in dem Hilfs-Oxidationskatalysator zugeführten Abgas mittels einer Anfetteinrichtung einstellbar.

Ferner offenbart die DE 10 2012 021 573 A1 ein Verfahren zur Steuerung oder Regelung eines mit Luft und Kraftstoff betriebenen Abgasbrenners, dessen Brennerabgas mit einem verbrennungsmotorischen Abgas einer fremdgezündeten Brennkraftmaschine zusammengeführt und ein so erhaltenes Mischabgas einem eine drei-wege-katalytische Funktion aufweisenden Abgaskatalysator zugeführt wird. Dabei ist vorgesehen, dass ein Ist-Sauerstoffgehalt des Mischabgases oder eine hiermit korrelierende Größe gemessen wird und eine dem Brenner zugeführte Kraftstoffmenge so beeinflusst wird, dass sich der Ist-Sauerstoffgehalt einem Soll-Sauerstoffgehalt des Mischabgases zumindest annähert.

Nachteilig an den bekannten Lösungen ist jedoch, dass für große, leistungsstarke Verbrennungsmotoren große Abgasbrenner mit hohen Heizleistungen notwendig sind. Dabei ist die Leistung des Abgasbrenners durch die maximal umsetzbare Kraftstoffmenge bezogen auf den vorhandenen Bauraum begrenzt. Somit lässt sich die Brennerleistung nicht beliebig steigern, wodurch eine weitere Verkürzung der Aufheizzeit durch den Abgasbrenner nicht möglich ist.

Der Erfindung liegt nun die Aufgabe zugrunde, das Aufheizen eines Katalysators mit Drei-Wege-Funktion in Unterbodenlage eines Kraftfahrzeuges weiter zu beschleunigen und somit den Zeitraum bis zum Erreichen seiner Light-Off-Temperatur nochmals zu verkürzen.

Erfindungsgemäß wird diese Aufgabe durch ein Abgasnachbehandlungssystem für einen Verbrennungsmotor mit einer Abgasanlage, welche mit einem Auslass des Verbrennungsmotors verbindbar ist, gelöst. Dabei sind in der Abgasanlage in Strömungsrichtung eines Abgases des Verbrennungsmotors durch einen Abgaskanal der Abgasanlage ein motornaher erster Katalysator und stromabwärts des motornahen ersten Katalysators ein zweiter Katalysator angeordnet. Erfindungsgemäß ist vorgesehen, dass stromabwärts des ersten Katalysators und stromaufwärts des zweiten Katalysators ein Abgasbrenner angeordnet ist, mithilfe dessen ein heißes Brennerabgas des Abgasbrenners an einer Einleitstelle stromabwärts des ersten Katalysators in den Abgaskanal eingeleitet werden kann. Stromabwärts der Einleitstelle für den Abgasbrenner und stromaufwärts des zweiten Katalysators ist ein Kraftstoffinjektor angeordnet, mit welchem Kraftstoff stromaufwärts des zweiten Katalysators in den Abgaskanal eindosierbar ist. Unter einem motornahen ersten Katalysator ist in diesem Zusammenhang ein Katalysator mit einer Drei-Wege-Funktion zu verstehen, dessen Einlass eine Abgaslauflänge von maximal 80 cm, vorzugsweise von maximal 50 cm, ab einem Auslass des Verbrennungsmotors aufweist. Durch ein erfindungsgemäßes Abgasnachbehandlungssystem kann die Heizleistung gegenüber einem Abgasnachbehandlungssystem, welches ausschließlich mittels eines Abgasbrenners beheizt wird, vergrößert werden, wodurch eine schnellere und effizientere Konvertierung der gasförmigen Schadstoffe im Abgasstrom des Verbrennungsmotors möglich ist.

Erfindungsgemäß ist vorgesehen, dass stromabwärts des motornahen ersten Katalysators und stromaufwärts der Einleitstelle für das heiße Abgas des Abgasbrenners eine Sekundärlufteinleitstelle in den Abgaskanal ausgebildet ist. Durch ein Sekundärluftsystem kann der zur exothermen Umsetzung des eindosierten Kraftstoffs notwendige Sauerstoff zur Verfügung gestellt werden, wodurch der Verbrennungsmotor mit einem stöchiometrischen Verbrennungsluftverhältnis betrieben werden kann. Dies senkt die Rohemissionen und ermöglicht eine effiziente Abgasnachbehandlung durch den motornahen ersten Katalysator.

Durch die in den abhängigen Ansprüchen aufgeführten Merkmale sind vorteilhafte Verbesserungen und nicht triviale Weiterentwicklungen des im unabhängigen Anspruch angegebenen Abgasnachbehandlungssystems möglich.

In einer bevorzugten Ausführungsform der Erfindung ist vorgesehen, dass der motornahe erste Katalysator als Drei-Wege-Katalysator oder als Vier-Wege-Katalysator ausgeführt ist. Durch einen Katalysator mit einer Drei-Wege-Funktion können sowohl teiloxidierte Abgaskomponenten wie Kohlenmonoxid, unverbrannte Kohlenwasserstoffe und Wasserstoff oxidiert, als auch Stickoxide reduziert werden. Dies ermöglicht eine besonders effiziente Abgasreinigung.

Darüber hinaus ist mit Vorteil vorgesehen, dass der zweite Katalysator als Drei-Wege-Katalysator oder als Vier-Wege-Katalysator ausgeführt ist. Durch einen zweiten Katalysator mit einer Drei-Wege-Funktion kann sowohl der Abgasstrom des Verbrennungsmotors als auch das Abgas des Abgasbrenners nachbehandelt werden. Zudem kann die Konvertierungsleistung bei hohen Leistungsanforderungen gesteigert werden, da durch den motornahen ersten Katalysator und den zweiten Katalysator in Unterbodenlage entsprechend große Katalysatorvolumina zur Verfügung gestellt werden. Zudem kann durch die Heizmaßnahme erreicht werden, dass zumindest einer der Katalysatoren seine Light-Off-Temperatur erreicht und somit eine effiziente Konvertierung von Schadstoffen ermöglicht.

Besonders bevorzugt ist dabei, wenn der zweite Katalysator als Lambdasondenkatalysator ausgeführt ist, wobei stromabwärts eines ersten Katalysatorvolumens des Drei-Wege-Katalysators und stromaufwärts eines zweiten Katalysatorvolumens des Drei-Wege-Katalysators eine Lambdasonde angeordnet ist. Dabei weist das erste Katalysatorvolumen eine geringere Sauerstoffspeicherfähigkeit als das zweite Katalysatorvolumen auf. Die Kombination eines Abgasbrenners mit einem Lambdasondenkatalysator ermöglicht es, die Emissionen während der Heizphase des Drei-Wege-Katalysators zu minimieren. Dabei wird das Mischlambda aus Abgas des Verbrennungsmotors und Brennerabgas, Sekundärluft und eindosiertem Kraftstoff auf ein stöchiometrisches Abgas mithilfe der vierten Lambdasonde des Lambdasondenkatalysators eingeregelt. Der Drei-Wege-Katalysator verfügt über eine Sauerstoffspeicherfähigkeit (OSC - Oxygen Storage Capacity). Diese Sauerstoffspeicherfähigkeit führt dazu, dass die Abweichung des Lambdasignals an der Lambdasonde des Lambdasondenkatalysators zeitverzögert erkannt wird. Aus diesem Grund ist die Lambdasonde näher am Einlass des Lambdasondenkatalysators als am Auslass positioniert, sodass die Sauerstoffspeicherfähigkeit des zweiten Katalysatorvolumens größer als die Sauerstoffspeicherfähigkeit des ersten Katalysatorvolumens ist. Somit kann das zweite Katalysatorvolumen des Lambdasondenkatalysators genutzt werden, um einen Fettdurchbruch oder einen Magerdurchbruch zu vermeiden. Darüber hinaus kann die Funktion des Lambdasondenkatalysators mit der Lambdasonde diagnostiziert werden, ohne dass ein Lambdadurchbruch während der Diagnose auftritt.

In weiterer bevorzugter Ausgestaltung der Erfindung ist vorgesehen, dass stromabwärts des zweiten Katalysators ein weiterer Katalysator oder ein Ottopartikelfilter angeordnet ist. Durch einen weiteren Katalysator, insbesondere einen weiteren Drei-Wege-Katalysator kann das katalytisch wirksame Volumen weiter vergrößert werden. Zudem können Durchbrüche durch den zweiten Katalysator kompensiert werden, sodass ein Fett- oder Magerdurchbruch durch den zweiten Katalysator nicht zu einem Anstieg der Endrohremissionen führt. Durch einen Partikelfilter ist es möglich, den Abgasstrom des Verbrennungsmotors zusätzlich von Rußpartikeln zu befreien. Dies kann notwendig sein, um bei Ottomotoren mit hoher Leistung und/oder bei Kraftfahrzeugen mit hohem Gewicht die Emissionsforderungen der immer schärfer werdenden Abgasgesetzgebung zu erfüllen.

In einer alternativen Ausführungsform der Erfindung ist vorgesehen, dass der zweite Katalysator als ein elektrisch beheizbarer Katalysator ausgeführt ist. Durch ein elektrisches Heizelement ist ein zusätzliches Beheizen des zweiten Katalysators möglich. Dadurch kann bei gleicher Brennerleistung des Abgasbrenners die Light-Off-Temperatur des zweiten Katalysators noch schneller erreicht werden. Dadurch können die Endrohremissionen weiter reduziert werden, da das Zeitfenster, in welchem die Abgasemissionen die Katalysatoren unkonvertiert durchströmen, weiter verkleinert wird.

In einer vorteilhaften Ausführungsform des Abgasnachbehandlungssystems ist vorgesehen, dass im Abgaskanal stromabwärts des Auslasses des Verbrennungsmotors und stromaufwärts des motornahen ersten Katalysators eine Turbine eines Abgasturboladers angeordnet ist.

Erfindungsgemäß wird ein Verfahren zur Abgasnachbehandlung eines Verbrennungsmotors mit einem erfindungsgemäßen Abgasnachbehandlungssystem vorgeschlagen, welches folgende Schritte umfasst:
- Start des Verbrennungsmotors;
- Aktivierung des Abgasbrenners, wobei das heiße Abgas des Abgasbrenners in den Abgaskanal eingeleitet wird, um den zweiten Katalysator auf seine Light-Off-Temperatur aufzuheizen, wobei
- nach Erreichen der Light-Off-Temperatur des zweiten Katalysators zusätzlich Kraftstoff in den Abgaskanal stromabwärts der Einleitstelle des Abgasbrenners eindosiert wird, welcher auf dem zweiten Katalysator exotherm umgesetzt wird, um das weitere Aufheizen des zweiten Katalysators zu unterstützen.

Durch ein erfindungsgemäßes Verfahren können die Abgasnachbehandlungskomponenten, insbesondere der zweite Katalysator in Unterbodenlage, gegenüber den aus dem Stand der Technik bekannten Verfahren schneller auf ihre Betriebstemperatur aufgeheizt werden. Dadurch können die Emissionen bei einem Kaltstart des Verbrennungsmotors reduziert werden.

In einer weiteren Verbesserung des Verfahrens ist vorgesehen, dass nach Erreichen der Light-Off-Temperatur des zweiten Katalysators Sekundärluft in den Abgaskanal eingeblasen wird, wobei der eindosierte Kraftstoff mit der Sekundärluft exotherm auf dem zweiten Katalysator umgesetzt wird, um das weitere Aufheizen des zweiten Katalysators zu fördern. Durch das Einbringen von Sekundärluft kann der Verbrennungsmotor während der gesamten Heizphase mit einem stöchiometrischen Verbrennungsluftverhältnis betrieben werden. Dies verringert die Rohemissionen, insbesondere die Emissionen an Stickoxiden und erlaubt eine effiziente Konvertierung von Schadstoffen durch den motornahen ersten Katalysator. Dadurch können die Emissionen weiter reduziert werden.

Bevorzugt ist dabei, wenn sowohl der Verbrennungsmotor als auch der Abgasbrenner in der gesamten Heizphase des zweiten Katalysators mit einem stöchiometrischen Verbrennungsluftverhältnis betrieben werden. Durch ein stöchiometrisches Verbrennungsluftverhältnis können die Abgase des Verbrennungsmotors durch beide Katalysatoren und die Abgase des Abgasbrenners durch den zweiten Katalysator effizient nachbehandelt werden. Dadurch können die Emissionen in der Heizphase minimiert werden.

In einer besonders bevorzugten Verbesserung des Verfahrens ist vorgesehen, dass die in den Abgaskanal eingebrachte Sekundärluftmenge und die in den Abgaskanal eindosierte Kraftstoffmenge derart gewählt werden, dass sich stromaufwärts des zweiten Katalysators ein stöchiometrisches Abgas einstellt. Dadurch ist eine besonders effiziente und emissionsarme exotherme Umsetzung des eindosierten Kraftstoffs auf dem zweiten Katalysator möglich, wobei der zweite Katalysator durch den Abgasstrom des Verbrennungsmotors, die heißen Brennerabgase des Abgasbrenners und die exotherme Reaktion auf der katalytischen Oberfläche des zweiten Katalysators aufgeheizt wird. Dies beschleunigt das Aufheizen gegenüber aus dem Stand der Technik bekannten Heizverfahren.

In einer bevorzugten Ausführungsvariante des Verfahrens ist vorgesehen, dass das Verbrennungsluftverhältnis des Abgasbrenners bis zum Erreichen der Light-Off-Temperatur des zweiten Katalysators über mindestens eine Lambdasonde in der Abgasanlage auf ein stöchiometrisches Verbrennungsluftverhältnis geregelt wird. Durch eine Lambdasonde ist eine besonders einfache und exakte Regelung des Verbrennungsluftverhältnisses des Abgasbrenners möglich.

Besonders bevorzugt ist dabei, wenn die Kraftstoff- und Luftmenge des Abgasbrenners nach Aktivierung der Sekundärluftzufuhr und der Kraftstoffeindosierung vorgesteuert werden. Da durch die Sekundärlufteinblasung und die Eindosierung von Kraftstoff in den Abgaskanal eine Lambdaregelung des Abgasbrenners nicht mehr möglich ist, ist es sinnvoll, das Verbrennungsluftverhältnis des Abgasbrenners vorzusteuern und insbesondere das Verbrennungsluftverhältnis aus der vorhergehenden Heizphase beizubehalten.

Erfindungsgemäß wird ein Kraftfahrzeug mit einem Hybridantrieb aus einem Verbrennungsmotor und einem elektrischen Antriebsmotor vorgeschlagen, wobei der Verbrennungsmotor mit seinem Auslass mit einem erfindungsgemäßen Abgasnachbehandlungssystem verbunden ist. Bei einem Kraftfahrzeug mit Hybridantrieb kommt es im rein elektrischen Fahrbetrieb zu einem Auskühlen der Abgasanlage. Wird anschließend eine hohe Leistung angefordert und muss der Verbrennungsmotor zur Erfüllung dieser Leistungsanforderung zugeschaltet werden, so ist es notwendig, die Abgasnachbehandlungskomponenten möglichst schnell auf ihre Betriebstemperatur aufzuheizen. Dazu wird ein erfindungsgemäßes Verfahren durchgeführt.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein bevorzugtes Ausführungsbeispiel eines Abgasnachbehandlungssystems für einen Verbrennungsmotor;
- Figur 2: Diagramme zum Verlauf der Verbrennungsluftverhältnisse und der Temperatur des zweiten Drei-Wege-Katalysators in Unterbodenlage bei der Durchführung eines erfindungsgemäßen Verfahrens zur Abgasnachbehandlung;
- Figur 3: ein weiteres Ausführungsbeispiel eines Abgasnachbehandlungssystems für einen Verbrennungsmotor, wobei die Sekundärlufteinleitstelle stromabwärts des ersten Katalysators und die Lambdasonde stromaufwärts des zweiten Katalysators entfällt;
- Figur 4: ein alternatives Ausführungsbeispiel eines Abgasnachbehandlungssystems für einen fremdgezündeten Verbrennungsmotor, wobei der zweite Katalysator als Vier-Wege-Katalysator ausgeführt ist und dem Vier-Wege-Katalysator ein weiterer Drei-Wege-Katalysator nachgeschaltet ist;
- Figur 5: ein weiteres alternatives Ausführungsbeispiel eines Abgasnachbehandlungssystems, wobei der erste Katalysator als Vier-Wege-Katalysator ausgeführt ist;
- Figur 6: ein weiteres Ausführungsbeispiel eines erfindungsgemäßen Abgasnachbehandlungssystems, wobei der zweite Katalysator als elektrisch beheizbarer Katalysator ausgeführt ist;
- Figur 7: ein weiteres Ausführungsbeispiel eines erfindungsgemäßen Abgasnachbehandlungssystems, wobei dem zweiten Katalysator ein Ottopartikelfilter nachgeschaltet ist;
- Figur 8: ein weiteres Ausführungsbeispiel eines erfindungsgemäßen Abgasnachbehandlungssystems, wobei dem zweiten Katalysator ein weiterer Drei-Wege-Katalysator nachgeschaltet ist; und
- Figur 9: eine schematische Darstellung eines Kraftfahrzeuges mit Hybridantrieb, wobei der Hybridantrieb einen elektrischen Antriebsmotor und einen Verbrennungsmotor aufweist, wobei der Verbrennungsmotor mit einem erfindungsgemäßen Abgasnachbehandlungssystem verbunden ist.

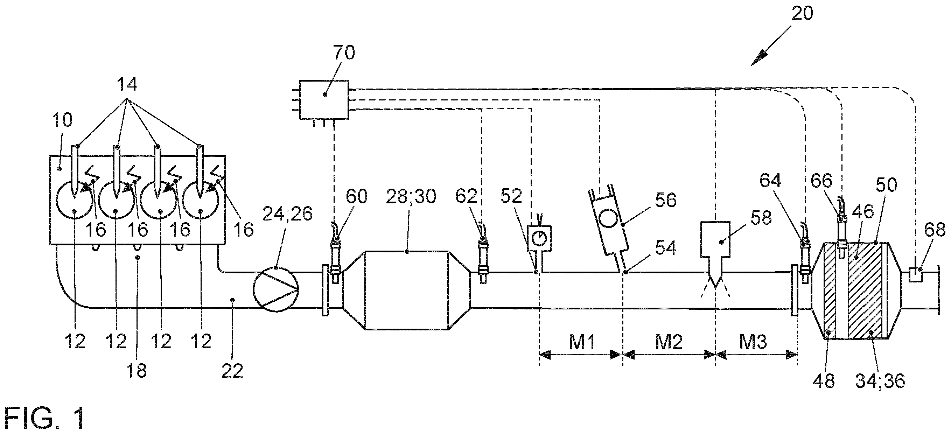

Figur 1 zeigt die schematische Darstellung eines Verbrennungsmotors 10 mit mehreren Brennräumen 12, welcher mit seinem Auslass 18 mit einer Abgasanlage 20 verbunden ist. Der Verbrennungsmotor 10 ist als direkteinspritzender Ottomotor ausgeführt und weist an jedem Brennraum 12 einen Kraftstoffinjektor 14 und eine Zündkerze zur Zündung eines brennfähigen Kraftstoff-Luft-Gemischs in den Brennräumen 12 auf. Der Brennraum 12 wird durch einen Kolben begrenzt, welcher in einer Zylinderbohrung des Verbrennungsmotors 10 linear verschiebbar angeordnet ist. Der Kolben ist über einen Pleuel mit einer Kurbelwelle des Verbrennungsmotors 10 verbunden, welche die Leistung des Verbrennungsmotors 10 auf ein Getriebe übertragen.

Die Abgasanlage 20 umfasst einen Abgaskanal 22, in welchem in Strömungsrichtung eines Abgases des Verbrennungsmotors 10 durch den Abgaskanal 22 eine Turbine 26 eines Abgasturboladers 24 angeordnet ist, welche einen nicht dargestellten Verdichter im Ansaugtrakt des Verbrennungsmotors 10 über eine Welle antreibt. Der Abgasturbolader 24 kann als Abgasturbolader 24 mit variabler Turbinengeometrie ausgeführt sein. Dazu sind einem Turbinenrad der Turbine 26 verstellbare Leitschaufeln vorgeschaltet, über welche die Anströmung des Abgases auf die Schaufeln der Turbine 26 variiert werden kann. Stromabwärts der Turbine 26 ist als motornaher erster Katalysator 28 ein Drei-Wege-Katalysator 30 im Abgaskanal 22 angeordnet. Stromabwärts des motornahen Drei-Wege-Katalysators 30 ist in einer Unterbodenlage eines Kraftfahrzeuges als zweiter Katalysator 34 ein weiterer Drei-Wege-Katalysator 36 angeordnet. Der zweite Drei-Wege-Katalysator 36 ist als Lambdasondenkatalysator 46 mit einem ersten Katalysatorvolumen 48 und einem zweiten Katalysatorvolumen 50 ausgebildet, wobei stromabwärts des ersten Katalysatorvolumens 48 und stromaufwärts des zweiten Katalysatorvolumens 50 eine Lambdasonde 66 angeordnet ist.

Stromabwärts des motornahen Drei-Wege-Katalysators 30 ist eine Sekundärlufteinleitstelle 52, stromabwärts der Sekundärlufteinleitstelle 52 eine Einleitstelle 54 für einen Abgasbrenner 56 und stromabwärts der Einleitstelle 54 für die heißen Abgase des Abgasbrenners 56 und stromaufwärts des zweiten Katalysators 34 ein Kraftstoffinjektor 58 zur Eindosierung von Kraftstoff in den Abgaskanal 22 angeordnet. Stromabwärts der Turbine 26 des Abgasturboladers 24 und stromaufwärts des motornahen ersten Katalysators 28 ist eine erste Lambdasonde 60, insbesondere eine Breitbandsonde, angeordnet. Stromabwärts des motornahen ersten Katalysators 28 und stromaufwärts der Sekundärlufteinleitstelle 52 ist eine zweite Lambdasonde 62 angeordnet. Am Einlass des zweiten Katalysators 34 kann eine dritte Lambdasonde 64 angeordnet sein. Ferner kann im Abgaskanal 22 ein Temperatursensor 68 angeordnet sein, um eine Abgastemperatur zu erfassen. Zusätzlich sind weitere Abgassensoren möglich, um die Konzentration einzelner Schadstoffe im Abgas zu messen und die Funktion der Katalysatoren zu überprüfen. Die Lambdasonden 60, 62, 64, 66 sind über Signalleitungen mit einem Motorsteuergerät 70 des Verbrennungsmotors 10 verbunden, über welches auch die Einspritzmenge und der Zündzeitpunkt in den Brennräumen gesteuert wird.

Stromabwärts der Sekundärlufteinleitstelle 52 ist eine erste Mischstrecke M1 ausgebildet, in welcher sich die Sekundärluft mit dem Abgasstrom des Verbrennungsmotors 10 vermischt. Stromabwärts der Einleitstelle 54 des Abgasbrenners 56 ist eine zweite Mischstrecke M2 ausgebildet, in welcher sich das heiße Brennerabgas mit dem Abgasstrom des Verbrennungsmotors 10 vermischt. Stromabwärts des Kraftstoffinjektors 58 ist bis zum Einlass des zweiten Katalysators 34 eine dritte Mischstrecke M3 ausgebildet, in welcher der eindosierte Kraftstoff verdampft und sich mit dem Abgasstrom des Verbrennungsmotors 10 vermischt.

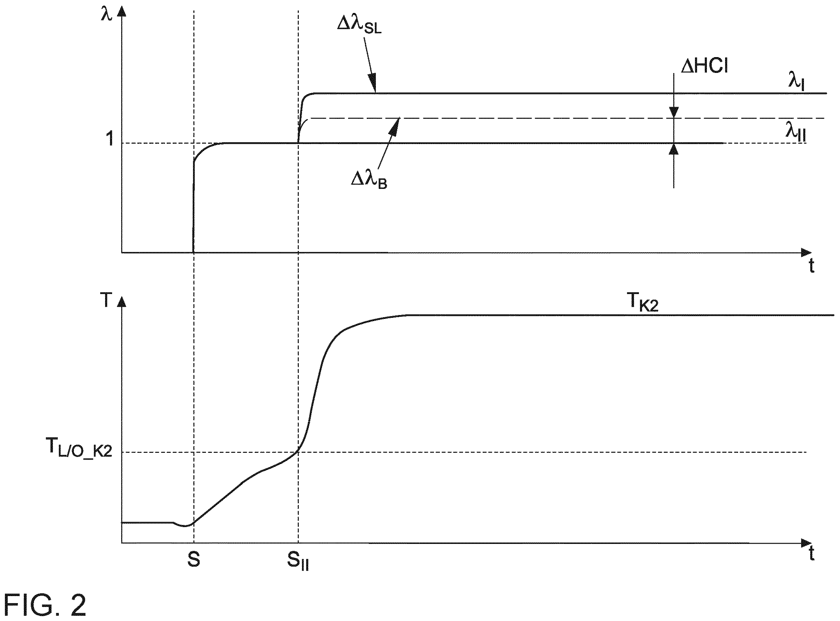

Das erfindungsgemäße Verfahren zur Abgasnachbehandlung zielt auf eine Erhöhung der Heizleistung für den zweiten Katalysator 34 im Vergleich zu den aus dem Stand der Technik bekannten Heizmaßnahmen, insbesondere einem alleinigen Aufheizen des Abgasstroms durch den Abgasbrenner 56 bei einem stöchiometrischen Betrieb des Verbrennungsmotors 10. Mithilfe des Abgasbrenners 56 wird der zweite Katalysator 34 wie in Figur 2 dargestellt nach einem Kaltstart S des Verbrennungsmotors 10 zeitnah auf seine Light-Off-Temperatur T_{L/O K2} aufgeheizt. Nach dem Erreichen der Light-Off-Temperatur T_{L/O K2} des zweiten Katalysators 34 werden zu einem Zeitpunkt S_{II} sowohl die Sekundärlufteinbringung über die Sekundärlufteinleitstelle 52 als auch die Kraftstoffeinspritzung in den Abgaskanal 22 mittels des Kraftstoffinjektors 58 aktiviert. Der überschüssige Sauerstoff aus der Sekundärluft reagiert dabei mit dem Kraftstoff exotherm an der aufgeheizten, katalytisch wirksamen Oberfläche des zweiten Katalysators 34 und erwärmt diesen zusätzlich. Der Verbrennungsmotor 10 und der Abgasbrenner 54 werden dabei stets mit einem stöchiometrischen Verbrennungsluftverhältnis betrieben. Die Zumessung der Sekundärluft und des in den Abgaskanal eingespritzten Kraftstoffs werden dabei so gesteuert oder geregelt, dass sich ein stöchiometrisches Abgas vor dem Eintritt des Abgasstroms in den zweiten Katalysator 34 einstellt. Stromabwärts der Sekundärlufteinleitstelle ändert sich das Abgasluftverhältnis, sodass in der ersten Mischstrecke M1 ein überstöchiometrisches Abgas λ_{I} vorliegt. Durch die Einbringung des heißen, stöchiometrischen Brennerabgases sinkt das Abgaslambda λ_{II} in der zweiten Mischstrecke M2, bleibt jedoch weiterhin überstöchiometrisch. Durch die Eindosierung des Kraftstoffs wird in der dritten Mischstrecke M3 ein stöchiometrisches Abgas erreicht.

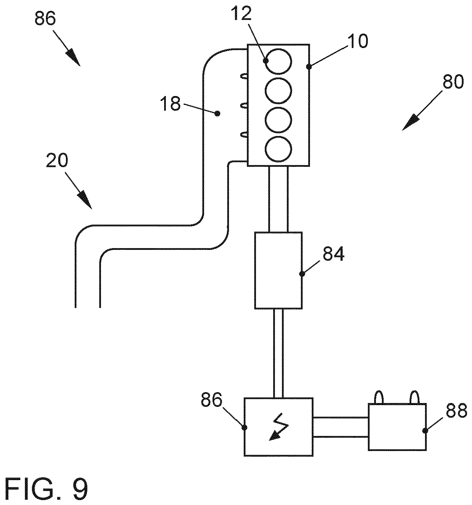

Die Einbringung von Sekundärluft und das gleichzeitige Eindosieren von Kraftstoff in den Abgaskanal wirken wie eine virtuelle Vergrößerung der Brennkammer des Abgasbrenners. Dadurch werden weniger Partikelemissionen und ein höherer Gesamtwirkungsgrad erreicht. Weiterhin vorteilhaft ist eine schnellere Durchwärmung des zweiten Katalysators 34 in Unterbodenlage eines Kraftfahrzeuges 86 durch einen größeren Massenstrom. Hierdurch wird eine Durchwärmung eines größeren Volumens des zweiten Katalysators 34 sichergestellt. Dies ist insbesondere bei Antriebskonzepten mit hoher Motorleistung wichtig. Wird mit einem solchen Kraftfahrzeug 86 kurz nach einem Start S des Verbrennungsmotors 10 eine starke Beschleunigung durchgeführt, wird ein hohes aktives Katalysatorvolumen benötigt, um einen Emissionsschlupf zu vermeiden. Ein solches Verfahren ist insbesondere auch für ein in Figur 9 schematisch dargestelltes Kraftfahrzeug 86 mit einem Hybridantrieb 80 aus einem elektrischen Antriebsmotor 86 und einem Verbrennungsmotor 10 interessant, wenn der Verbrennungsmotor 10 unter hoher Lastanforderung gestartet wird.

Das erfindungsgemäße Verfahren sieht vor, dass bei einer Anforderung für ein Heizen des zweiten Katalysators 34 der Abgasbrenner 56 mit dem Motorstart S den zweiten Katalysator 34 vorheizt, wobei gleichzeitig diese Vorheizzeit genutzt wird, um die Lambdaregelung des Abgasbrenners 56 zu adaptieren, da in diesem Verfahrensschritt keine weitere Beeinflussung des Abgasluftverhältnisses durch die Sekundärlufteinblasung oder die Kraftstoffeindosierung vorliegt. Sowohl der Verbrennungsmotor 10 als auch der Abgasbrenner 56 werden bis zum Erreichen der Light-Off-Temperatur T_{L/O K2} des zweiten Katalysators 34 mit den entsprechenden Lambdasonden 60, 64, 66 stromaufwärts des motornahen ersten Katalysators 28 und stromabwärts der Einleitstelle 54 der Brennerabgase auf ein stöchiometrisches Verbrennungsluftverhältnis eingeregelt. Ab Erreichen der Light-Off-Temperatur T_{L/O K2} des zweiten Katalysators 34, insbesondere einer Temperatur zwischen 300°C und 400°C, besonders bevorzugt zwischen 340°C und 360°C, wird die Sekundärlufteinblasung und die Kraftstoffeindosierung aktiviert und der Abgasbrenner 56 nur noch gesteuert und nicht mehr geregelt, da die Sekundärlufteinblasung und die Kraftstoffeindosierung eine Lambdaregelung des Abgasbrenners 56 verhindern. Die Sekundärlufteinblasung bewirkt durch eine Vermischung mit dem Abgasstrom des Verbrennungsmotors 10 ein mageres Abgas stromaufwärts der Einleitstelle 54 des Abgasbrenners 56. Durch das stöchiometrische Brennerabgas wird das Abgasluftverhältnis stromabwärts der Einleitstelle 54 durch das zuströmende Brennerabgas in Richtung fett verschoben, bleibt jedoch im überstöchiometrischen Bereich. Durch die Eindosierung des Kraftstoffes in das magere Abgas findet eine Gemischaufbereitung statt, welche einen stöchiometrischen Abgasstrom erzeugt. Somit findet ab dem Erreichen der Light-Off-Temperatur T_{L/O K2} des zweiten Katalysators 34 die Lambdaregelung des Mischabgases mittels der dritten oder vierten Lambdasonde 64, 66 unmittelbar stromaufwärts des zweiten Katalysators 34 oder im zweiten Katalysator 34 statt.

Alternativ kann das Verfahren verwendet werden, um einen Ottopartikelfilter oder einen Vier-Wege-Katalysator in Unterbodenlage eines Kraftfahrzeuges auf seine Regenerationstemperatur aufzuheizen. Das Verfahren wird beendet und somit der Abgasbrenner 56 abgeschaltet, die Sekundärlufteinbringung und die Kraftstoffeindosierung gestoppt, wenn der zweite Katalysator 34 eine Zieltemperatur erreicht hat.

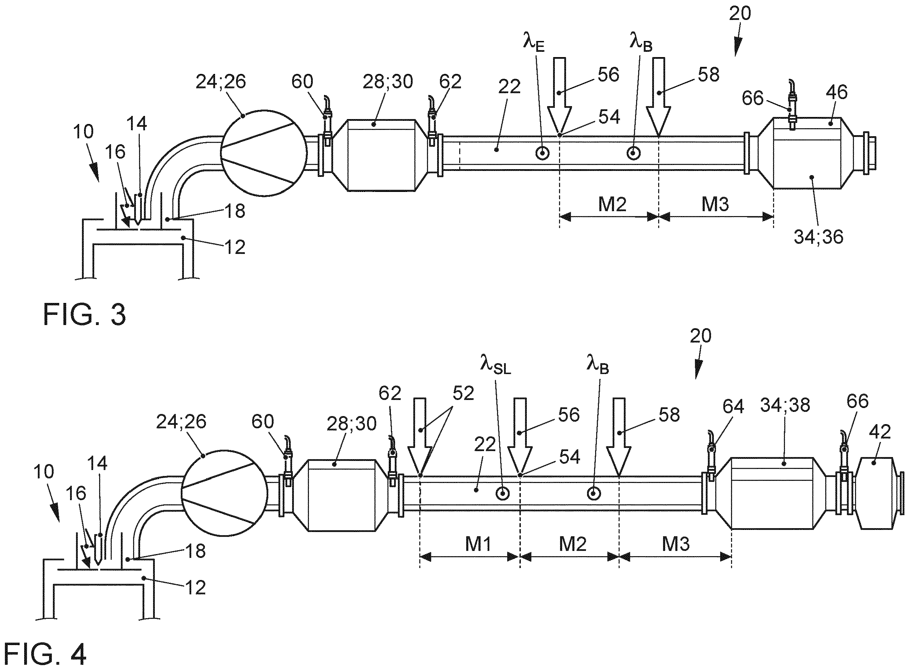

In Figur 3 ist ein nicht zur Erfindung gehörendes Ausführungsbeispiel für ein Abgasnachbehandlungssystem dargestellt. Bei im Wesentlichen gleichem Aufbau wie zu Figur 1 ausgeführt, wird im Folgenden nur auf die Unterschiede eingegangen. Bei diesem Ausführungsbeispiel wird auf ein Sekundärluftsystem verzichtet. Dabei wird der Verbrennungsmotor 10 ab Erreichen der Light-Off-Temperatur T_{L/O K2} des zweiten Katalysators 34 mit einem überstöchiometrischen Verbrennungsluftverhältnis betrieben, wobei durch die Kraftstoffeindosierung durch den Kraftstoffinjektor 58 ein stöchiometrisches Abgas vor Eintritt in den zweiten Katalysator 34 erreicht wird.

In Figur 4 ist ein alternatives Ausführungsbeispiel eines erfindungsgemäßen Abgasnachbehandlungssystems dargestellt. Bei im Wesentlichen gleichem Aufbau wie zu Figur 1 ausgeführt, ist in diesem Ausführungsbeispiel der zweite Katalysator 34 als Vier-Wege-Katalysator 38 ausgeführt. Stromabwärts des Vier-Wege-Katalysators 38 ist als dritter Katalysator 42 ein weiterer Drei-Wege-Katalysator angeordnet. Dabei ist die vierte Lambdasonde 66 stromabwärts des Vier-Wege-Katalysators 38 und stromaufwärts des dritten Katalysators 42 angeordnet. Dadurch kann eine einfache On-Board-Diagnose des Vier-Wege-Katalysators 38 durchgeführt werden. Durch den dritten Katalysator 38 stromabwärts des Vier-Wege-Katalysators 42 und der vierten Lambdasonde 66 erfolgt eine weitere Absicherung, um die vierte Lambdasonde 66 im Rahmen einer On-Board-Diagnose überprüfen zu können und bei der Durchführung einer solchen Diagnose einen Anstieg der Endrohremissionen zu vermeiden.

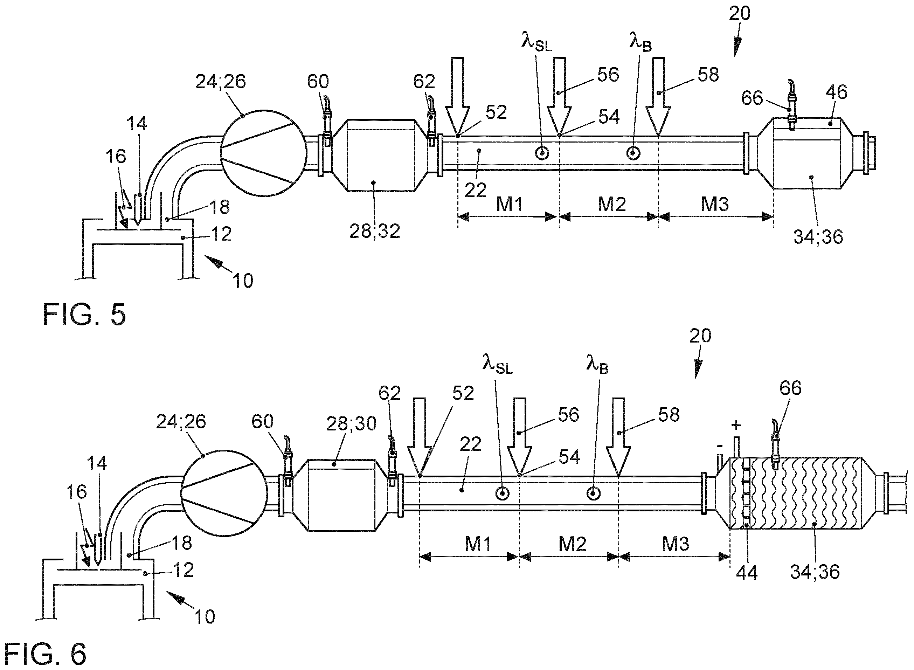

Figur 5 zeigt eine weitere alternative Ausführungsform eines erfindungsgemäßen Abgasnachbehandlungssystems. Bei im Wesentlichen gleichem Aufbau wie zu Figur 1 ausgeführt, ist in diesem Ausführungsbeispiel der motornahe erste Katalysator 28 als Vier-Wege-Katalysator 32 ausgeführt. Dabei kann die dritte Lambdasonde 64 entfallen. Durch den Vier-Wege-Katalysator ist eine zusätzliche Reinigung des Abgasstroms von Rußpartikeln möglich.

In Figur 6 ist ein weiteres Ausführungsbeispiel für ein erfindungsgemäßes Abgasnachbehandlungssystem dargestellt. Dabei ist der zweite Katalysator 34 in Unterbodenlage als ein elektrisch beheizbarer Drei-Wege-Katalysator 36, 44 ausgeführt. Ein elektrisch beheizbarer zweiter Katalysator bietet den Vorteil, dass die Zeit bis zum Erreichen der Light-Off-Temperatur bei gleicher Brennerleistung des Abgasbrenners 56 nochmals verkürzt werden kann und zusätzliche Heizenergie durch das elektrische Beheizen in den zweiten Katalysator 34 eingebracht werden kann.

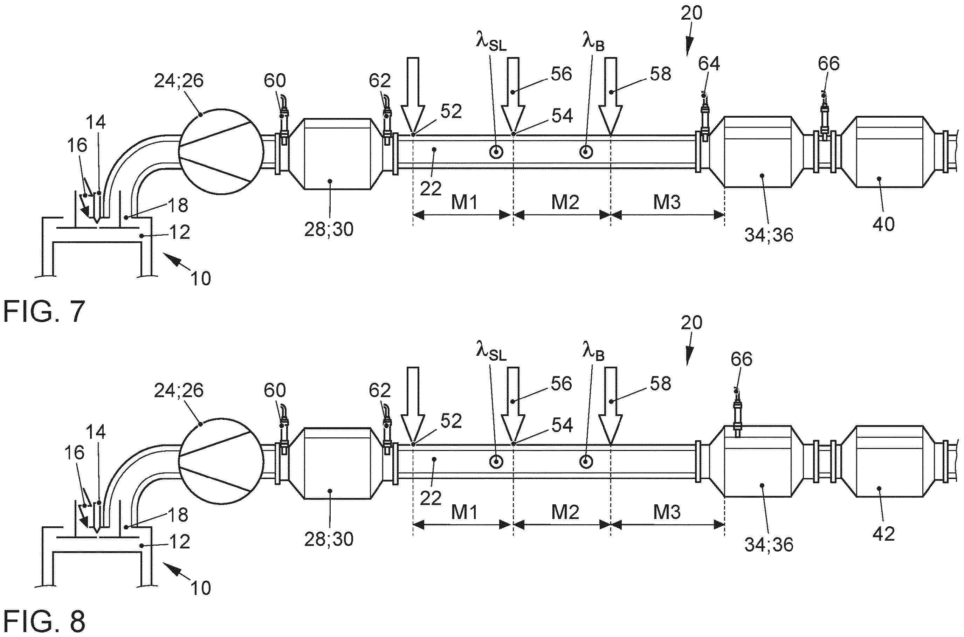

In Figur 7 ist ein weiteres Ausführungsbeispiel eines erfindungsgemäßen Abgasnachbehandlungssystems dargestellt. Bei im Wesentlichen gleichem Aufbau wie zu Figur 1 ausgeführt ist in diesem Ausführungsbeispiel stromabwärts des zweiten Drei-Wege-Katalysators 34, 36 ein weiterer Drei-Wege-Katalysator 42 angeordnet. Ferner ist die vierte Lambdasonde 66 stromabwärts des zweiten Drei-Wege-Katalysators 34, 36 und stromaufwärts des dritten Katalysators 42 angeordnet. Durch einen weiteren Drei-Wege-Katalysator 42 kann das insgesamt zur Verfügung stehende Katalysatorvolumen vergrößert werden und eine Absicherung gegen Durchbrüche durch den zweiten Katalysator 34 geschaffen werden. Darüber hinaus kann darauf verzichtet werden, den zweiten Katalysator 34 als Lambdasondenkatalysator auszuführen.

In Figur 8 ist ein weiteres Ausführungsbeispiel eines erfindungsgemäßen Abgasnachbehandlungssystems dargestellt. Bei im Wesentlichen gleichem Aufbau wie zu Figur 1 ausgeführt, ist in diesem Ausführungsbeispiel stromabwärts des zweiten Katalysators 34, welcher als Drei-Wege-Katalysator 36 ausgeführt ist, ein vorzugsweise unbeschichteter Ottopartikelfilter 40 im Abgaskanal 22 angeordnet. Durch den Ottopartikelfilter 40 können zusätzlich Rußpartikel aus dem Abgasstrom des Verbrennungsmotors 10 herausgefiltert werden.

Figur 9 zeigt schematisch den Aufbau eines Kraftfahrzeuges 86 mit einem Hybridantrieb 80 aus einem elektrischen Antriebsmotor 82 und einem Verbrennungsmotor 10. Der elektrische Antriebsmotor 86 ist mit einer Batterie 88 verbunden, aus welcher der elektrische Antriebsmotor 86 mit Strom versorgt wird. Der elektrische Antriebsmotor 86 und der Verbrennungsmotor 10 sind mit einem gemeinsamen Getriebe 84 verbunden, welches das Antriebsmoment an die Räder des Kraftfahrzeuges 86 überträgt. Der Verbrennungsmotor 10 ist mit seinem Auslass 18 mit einem erfindungsgemäßen Abgasnachbehandlungssystem verbunden. Wird bei einem Hybridantrieb 80 eine hohe Leistung angefordert und muss der Verbrennungsmotor 10 zur Erfüllung dieser Leistungsanforderung zugeschaltet werden, so ist ein schnelles Aufheizen der Abgasanlage des Verbrennungsmotors 10 zur Vermeidung von Emissionen besonders wichtig. Deshalb ist das vorgeschlagene Abgasnachbehandlungssystem bei einem Hybridantrieb 80 besonders vorteilhaft, um auf das Zuschalten des Verbrennungsmotors bei kalter Abgasanlage 20 entsprechend reagieren zu können und die Emissionen zu minimieren.

### Bezugszeichenliste

- 10: Verbrennungsmotor
- 12: Brennraum
- 14: Kraftstoffinjektor
- 16: Zündkerze
- 18: Auslass

- 20: Abgasanlage
- 22: Abgaskanal
- 24: Abgasturbolader
- 26: Turbine
- 28: motornaher erster Katalysator

- 30: Drei-Wege-Katalysator
- 32: Vier-Wege-Katalysator
- 34: zweiter Katalysator
- 36: Drei-Wege-Katalysator
- 38: Vier-Wege-Katalysator

- 40: Ottopartikelfilter
- 42: dritter Katalysator
- 44: elektrisch beheizbarer Katalysator
- 46: Lambdasondenkatalysator
- 48: erstes Katalysatorvolumen

- 50: zweites Katalysatorvolumen
- 52: Sekundärlufteinleitstelle
- 54: Einleitstelle für Brennerabgas
- 56: Abgasbrenner
- 58: Kraftstoffinjektor
- 60: erste Lambdasonde
- 62: zweite Lambdasonde
- 64: dritte Lambdasonde
- 66: vierte Lambdasonde
- 68: Temperatursensor

- 70: Motorsteuergerät

- 80: Hybridantrieb
- 82: elektrischer Antriebsmotor
- 84: Getriebe
- 86: Kraftfahrzeug
- 88: Batterie

- M1: erste Mischstrecke
- M2: zweite Mischstrecke
- M3: dritte Mischstrecke
- S: Start des Verbrennungsmotors
- S_{II}: Start der Sekundärlufteinblasung und der HC-Eindosierung

- T: Temperatur
- T_{K2}: Temperatur des zweiten Katalysators
- T_{L/O_K2}: Light-Off-Temperatur des zweiten Katalysators
- t: Zeit

- λ: Verbrennungsluftverhältnis
- λ_{B}: Verbrennungsluftverhältnis des Abgasbrenners
- λ_{E}: Verbrennungsluftverhältnis des Verbrennungsmotors
- λ_{I}: Abgasluftverhältnis vor der Einleitstelle des Abgasbrenners
- λ_{II}: Abgasluftverhältnis nach der Einleitstelle des Abgasbrenners

- Δλ_{SL}: Veränderung des Abgasluftverhältnisses durch die Sekundärlufteinblasung
- Δλ_{B}: Veränderung des Abgasluftverhältnisses durch das Brennerabgas
- ΔHCl: Veränderung des Abgasluftverhältnisses durch die Kraftstoffeindosierung

## Patentansprüche

1. Abgasnachbehandlungssystem für einen Verbrennungsmotor (10), umfassend eine Abgasanlage (20), welche mit einem Auslass (18) des Verbrennungsmotors (10) verbindbar ist, wobei in der Abgasanlage (20) in Strömungsrichtung eines Abgases des Verbrennungsmotors (10) durch einen Abgaskanal (22) der Abgasanlage (20) ein motornaher erster Katalysator (28) und stromabwärts des motornahen ersten Katalysators (28) ein zweiter Katalysator (34) angeordnet sind, wobei stromabwärts des ersten Katalysators (28) und stromaufwärts des zweiten Katalysators (34) eine Einleitstelle (54) für das heiße Abgas eines Abgasbrenners (56) ausgebildet ist, **dadurch gekennzeichnet, dass** stromabwärts der Einleitstelle (54) und stromaufwärts des zweiten Katalysators (34) ein Kraftstoffinjektor (58) zur Eindosierung von Kraftstoff in den Abgaskanal (22) angeordnet ist und stromabwärts des motornahen ersten Katalysators (28) und stromaufwärts der Einleitstelle (54) für das heiße Abgas des Abgasbrenners (56) eine Sekundärlufteinleitstelle (52) in den Abgaskanal (22) ausgebildet ist.

2. Abgasnachbehandlungssystem nach Anspruch 1, **dadurch gekennzeichnet, dass** der motornahe erste Katalysator (28) als Drei-Wege-Katalysator (30) oder als Vier-Wege-Katalysator (32) ausgeführt ist.

3. Abgasnachbehandlungssystem nach einem der Ansprüche 1 oder 2, **dadurch gekennzeichnet, dass** der zweite Katalysator (34) als Drei-Wege-Katalysator (36) oder als Vier-Wege-Katalysator (38) ausgeführt ist.

4. Abgasnachbehandlungssystem nach Anspruch 3, **dadurch gekennzeichnet, dass** der zweite Katalysator (34) als Lambdasondenkatalysator (46) ausgeführt ist.

5. Abgasnachbehandlungssystem nach einem der Ansprüche 1 bis 4, **dadurch gekennzeichnet, dass** stromabwärts des zweiten Katalysators (34) ein weiterer Katalysator (42) oder ein Ottopartikelfilter (30) angeordnet ist.

6. Abgasnachbehandlungssystem nach einem der Ansprüche 1 bis 5, **dadurch gekennzeichnet, dass** der zweite Katalysator (34) als elektrisch beheizbarer Katalysator (44) ausgeführt ist.

7. Abgasnachbehandlungssystem nach einem der Ansprüche 1 bis 6, **dadurch gekennzeichnet, dass** im Abgaskanal (22) stromabwärts des Auslasses (18) des Verbrennungsmotors (10) und stromaufwärts des motornahen ersten Katalysators (28) eine Turbine (26) eines Abgasturboladers (24) angeordnet ist.

8. Verfahren zur Abgasnachbehandlung eines Verbrennungsmotors (10) mit einem Abgasnachbehandlungssystem nach einem der Ansprüche 1 bis 7, umfassend folgende Schritte:
- Start des Verbrennungsmotors (10)
- Aktivierung des Abgasbrenners (56), wobei das heiße Abgas des Abgasbrenners (56) in den Abgaskanal (22) eingeleitet wird, um den zweiten Katalysator (34) auf seine Light-Off-Temperatur aufzuheizen, wobei
- nach Erreichen der Light-Off-Temperatur des zweiten Katalysators (34) zusätzlich Kraftstoff in den Abgaskanal (22) stromabwärts der Einleitstelle (54) des Abgasbrenners (56) eindosiert wird, welcher auf dem zweiten Katalysator (34) exotherm umgesetzt wird, um das weitere Aufheizen des zweiten Katalysators (34) zu unterstützen.

9. Verfahren zur Abgasnachbehandlung nach Anspruch 8, **dadurch gekennzeichnet, dass** nach Erreichen der Light-Off-Temperatur des zweiten Katalysators (34) Sekundärluft in den Abgaskanal (22) eingeblasen wird, wobei der eindosierte Kraftstoff mit der Sekundärluft exotherm auf dem zweiten Katalysator (34) umgesetzt wird, um das weitere Aufheizen des zweiten Katalysators (34) zu fördern.

10. Verfahren zur Abgasnachbehandlung nach Anspruch 9, **dadurch gekennzeichnet, dass** sowohl der Verbrennungsmotor (10) als auch der Abgasbrenner (56) in der gesamten Heizphase des zweiten Katalysators (34) mit einem stöchiometrischen Verbrennungsluftverhältnis (λ_{E} = 1, λ_{B} = 1) betrieben werden.

11. Verfahren zur Abgasnachbehandlung nach Anspruch 9 oder 10, **dadurch gekennzeichnet, dass** die in den Abgaskanal (22) eingebrachte Sekundärluftmenge und die in den Abgaskanal (22) eindosierte Kraftstoffmenge derart gewählt werden, dass sich stromaufwärts des zweiten Katalysators (34) ein stöchiometrisches Abgas einstellt.

12. Verfahren zur Abgasnachbehandlung nach einem der Ansprüche 8 bis 11, **dadurch gekennzeichnet, dass** das Verbrennungsluftverhältnis des Abgasbrenners (56) bis zum Erreichen der Light-Off-Temperatur des zweiten Katalysators (34) über eine Lambdasonde (64, 66) in der Abgasanlage (20) auf ein stöchiometrisches Verbrennungsluftverhältnis (λ_{B} = 1) geregelt wird.

13. Verfahren zur Abgasnachbehandlung nach Anspruch 12, **dadurch gekennzeichnet, dass** die Kraftstoff- und Luftmenge des Abgasbrenners (56) nach Aktivierung der Sekundärluftzufuhr und der Kraftstoffeindosierung vorgesteuert werden.

14. Kraftfahrzeug (86) mit einem Hybridantrieb (80) aus einem Verbrennungsmotor (10) und einem elektrischen Antriebsmotor (82), wobei der Verbrennungsmotor (10) mit seinem Auslass (18) mit einem Abgasnachbehandlungssystem nach einem der Ansprüche 1 bis 7 verbunden ist.

## Claims

1. Exhaust gas aftertreatment system for an internal combustion engine (10), comprising an exhaust gas system (20) which can be connected to an outlet (18) of the internal combustion engine (10), a first catalytic converter (28) which is close to the engine and, downstream of the first catalytic converter (28) which is close to the engine, a second catalytic converter (34) being arranged in the exhaust gas system (20) in the flow direction of an exhaust gas of the internal combustion engine (10) through an exhaust gas duct (22) of the exhaust gas system (20), an input point (54) for the hot exhaust gas of an exhaust gas burner (56) being configured downstream of the first catalytic converter (28) and upstream of the second catalytic converter (34), **characterized in that** a fuel injector (58) for metering fuel into the exhaust gas duct (22) is arranged downstream of the input point (54) and upstream of the second catalytic converter (34), and a secondary air input point (52) into the exhaust gas duct (22) is configured downstream of the first catalytic converter (28) which is close to the engine and upstream of the input point (54) for the hot exhaust gas of the exhaust gas burner (56).

2. Exhaust gas aftertreatment system according to Claim 1, **characterized in that** the first catalytic converter (28) which is close to the engine is configured as a three-way catalytic converter (30) or as a four-way catalytic converter (32).

3. Exhaust gas aftertreatment system according to either of Claims 1 or 2, **characterized in that** the second catalytic converter (34) is configured as a three-way catalytic converter (36) or as a four-way catalytic converter (38).

4. Exhaust gas aftertreatment system according to Claim 3, **characterized in that** the second catalytic converter (34) is configured as a lambda probe catalytic converter (46) .

5. Exhaust gas aftertreatment system according to one of Claims 1 to 4, **characterized in that** a further catalytic converter (42) or a gasoline particulate filter (30) is arranged downstream of the second catalytic converter (34).

6. Exhaust gas aftertreatment system according to one of Claims 1 to 5, **characterized in that** the second catalytic converter (34) is configured as an electrically heatable catalytic converter (44).

7. Exhaust gas aftertreatment system according to one of Claims 1 to 6, **characterized in that** a turbine (26) of an exhaust gas turbocharger (24) is arranged in the exhaust gas duct (22) downstream of the outlet (18) of the internal combustion engine (10) and upstream of the first catalytic converter (28) which is close to the engine.

8. Method for exhaust gas aftertreatment of an internal combustion engine (10) with an exhaust gas aftertreatment system according to one of Claims 1 to 7, comprising the following steps:
- starting of the internal combustion engine (10),
- activating of the exhaust gas burner (56), the hot exhaust gas of the exhaust gas burner (56) being introduced into the exhaust gas duct (22), in order to heat the second catalytic converter (34) to its light-off temperature,
- after the light-off temperature of the second catalytic converter (34) is reached, fuel additionally being metered into the exhaust gas duct (22) downstream of the input point (54) of the exhaust gas burner (56), which fuel is transformed exothermically on the second catalytic converter (34), in order to assist the further heating of the second catalytic converter (34).

9. Method for exhaust gas aftertreatment according to Claim 8, **characterized in that**, after the light-off temperature of the second catalytic converter (34) is reached, secondary air is blown into the exhaust gas duct (22), the fuel which is metered in with the secondary air being transformed exothermically on the second catalytic converter (34), in order to promote the further heating of the second catalytic converter (34).

10. Method for exhaust gas aftertreatment according to Claim 9, **characterized in that** both the internal combustion engine (10) and the exhaust gas burner (56) are operated with a stoichiometric combustion air ratio (λ_{E} = 1, λ_{B} = 1) in the entire heating phase of the second catalytic converter (34).

11. Method for exhaust gas aftertreatment according to Claim 9 or 10, **characterized in that** the secondary air quantity which is introduced into the exhaust gas duct (22) and the fuel quantity which is metered into the exhaust gas duct (22) are selected in such a way that a stoichiometric exhaust gas is set upstream of the second catalytic converter (34).

12. Method for exhaust gas aftertreatment according to one of Claims 8 to 11, **characterized in that** the combustion air ratio of the exhaust gas burner (56) is regulated to a stoichiometric combustion air ratio (λ_{B} = 1) via a lambda probe (64, 66) in the exhaust gas system (20) until the light-off temperature of the second catalytic converter (34) is reached.

13. Method for exhaust gas aftertreatment according to Claim 12, **characterized in that** the fuel and air quantity of the exhaust gas burner (56) are pilot-controlled after activation of the secondary air feed and the fuel air metering.

14. Motor vehicle (86) with a hybrid drive (80) consisting of an internal combustion engine (10) and an electric drive motor (82), the internal combustion engine (10) being connected by way of its outlet (18) to an exhaust gas aftertreatment system according to one of Claims 1 to 7.

## Revendications

1. Système de post-traitement de gaz d'échappement pour un moteur à combustion interne (10), comprenant une installation de gaz d'échappement (20) qui peut être reliée à une sortie (18) du moteur à combustion interne (10), un premier catalyseur (28) situé à proximité du moteur et un deuxième catalyseur (34) situé en aval du premier catalyseur (28) situé à proximité du moteur sont disposés dans l'installation de gaz d'échappement (20) dans la direction d'écoulement d'un gaz d'échappement du moteur à combustion interne (10) en passant à travers un canal de gaz d'échappement (22) de l'installation de gaz d'échappement (20), un point d'introduction (54) étant réalisé pour le gaz d'échappement chaud d'un brûleur de gaz d'échappement (56), sachant qu'en aval du flux du premier catalyseur (28) et en amont du flux du deuxième catalyseur (34), un injecteur de carburant (58) est disposé en aval du flux du point d'introduction (54) et en amont du flux du deuxième catalyseur (34) pour doser le carburant dans le canal de gaz d'échappement (22) et qu'un point d'introduction d'air secondaire (52) est réalisé dans le canal de gaz d'échappement (22), en aval du flux du premier catalyseur (28) situé à proximité du moteur et en amont du flux du point d'introduction (54) prévu pour le gaz d'échappement chaud du brûleur de gaz d'échappement (56).

2. Système de post-traitement de gaz d'échappement selon la revendication 1, **caractérisé en ce que** le premier catalyseur (28) situé à proximité du moteur est réalisé sous la forme d'un catalyseur à trois voies (30) ou sous la forme d'un catalyseur à quatre voies (32).

3. Système de post-traitement de gaz d'échappement selon l'une quelconque des revendications 1 ou 2, **caractérisé en ce que** le deuxième catalyseur (34) est réalisé sous la forme d'un catalyseur à trois voies (36) ou sous la forme d'un catalyseur à quatre voies (38).

4. Système de post-traitement de gaz d'échappement selon la revendication 3, **caractérisé en ce que** le deuxième catalyseur (34) est réalisé sous la forme d'un catalyseur d'ondes lambda (46).

5. Système de post-traitement de gaz d'échappement selon l'une quelconque des revendications 1 à 4, **caractérisé en ce qu'**un catalyseur (42) supplémentaire ou un filtre à particules Otto (30) est disposé en aval du flux du deuxième catalyseur (34).

6. Système de post-traitement de gaz d'échappement selon l'une quelconque des revendications 1 à 5, **caractérisé en ce que** le deuxième catalyseur (34) est réalisé sous la forme d'un catalyseur (44) pouvant être chauffé électriquement.

7. Système de post-traitement de gaz d'échappement selon l'une quelconque des revendications 1 à 6, **caractérisé en ce qu'**une turbine (26) d'une turbosoufflante à gaz d'échappement (24) est disposée dans le canal de gaz d'échappement (22) en aval du flux de la sortie (18) du moteur à combustion interne (10) et en amont du flux du premier catalyseur (28) situé à proximité du moteur.

8. Procédé de post-traitement de gaz d'échappement d'un moteur à combustion interne (10) avec un système de post-traitement de gaz d'échappement selon l'une quelconque des revendications 1 à 7, comprenant les étapes suivantes :
démarrage du moteur à combustion interne (10) ;
activation du brûleur de gaz d'échappement (56), le gaz d'échappement chaud du brûleur de gaz d'échappement (56) étant introduit dans le canal de gaz d'échappement (22) pour chauffer le deuxième catalyseur (34) à sa température Light-Off d'allumage, sachant qu'une fois la température Light-Off d'allumage du deuxième catalyseur (34) atteinte, du carburant supplémentaire est dosé dans le canal de gaz d'échappement (22) situé en aval du flux du point d'introduction (54) du brûleur de gaz d'échappement (56) qui est converti de façon exothermique sur le deuxième catalyseur (34) pour soutenir le chauffage supplémentaire du deuxième catalyseur (34).

9. Procédé de post-traitement de gaz d'échappement selon la revendication 8, **caractérisé en ce qu'**une fois la température Light-Off d'allumage du deuxième catalyseur (34) atteinte, de l'air secondaire est soufflé dans le canal de gaz d'échappement (22), le carburant dosé étant converti avec l'air secondaire de façon exotherme sur le deuxième catalyseur (34) pour extraire la chaleur supplémentaire du deuxième catalyseur (34).

10. Procédé de post-traitement de gaz d'échappement selon la revendication 9, **caractérisé en ce que** tant le moteur à combustion interne (10) que le brûleur de gaz d'échappement (56) est entraîné avec un rapport de combustion stœchiométrique (λ_{E} = 1, λ_{B} = 1) dans la totalité de la phase de chauffage du deuxième catalyseur (34) .

11. Procédé de post-traitement de gaz d'échappement selon la revendication 9 ou 10, **caractérisé en ce que** la quantité d'air secondaire amenée dans le canal de gaz d'échappement (22) et la quantité de carburant dosée dans le canal de gaz d'échappement (22) sont choisies de telle sorte qu'un gaz d'échappement stœchiométrique soit réglé en amont du flux du deuxième catalyseur (34).

12. Procédé de post-traitement de gaz d'échappement selon l'une quelconque des revendications 8 à 11, **caractérisé en ce que** le rapport d'air de combustion du brûleur de gaz d'échappement (56) jusqu'à ce que la température Light-Off d'allumage du deuxième catalyseur (34) soit atteinte est réglé sur un rapport d'air de combustion stœchiométrique (ÀB = 1) via une sonde lambda (64, 66) prévue dans l'installation de gaz d'échappement (20) .

13. Procédé de post-traitement de gaz d'échappement selon la revendication 12, **caractérisé en ce que** la quantité de carburant et d'air du brûleur de gaz d'échappement (56) sont précommandées en fonction de l'activation de l'amenée d'air secondaire et du dosage de carburant.

14. Véhicule automobile (86) avec un entraînement hybride (80) issu d'un moteur à combustion interne (10) et d'un moteur d'entraînement électrique (82), le moteur à combustion interne (10) étant relié au niveau de sa sortie (18) avec un système de post-traitement de gaz d'échappement selon l'une quelconque des revendications 1 à 7.
